# EUROPEAN PATENT APPLICATION

(11) **EP 2 857 366 A1**
(43) Date of publication of application: **08.04.2015**
(21) Application number: 13801109.3
(22) Date of filing: 04.06.2013
(51) Int. Cl.: C03C 3/091, C03C 3/093

(54) **ALKALI-FREE GLASS AND METHOD FOR PRODUCING SAME**

(30) Priority: 05.06.2012 JP 2012128248; 02.11.2012 JP 2012242783
(71) Applicant: Asahi Glass Company, Limited, Tokyo 100-8405 (JP)
(72) Inventor: NISHIZAWA Manabu, Tokyo 100-8405 (JP); TOKUNAGA Hirofumi, Tokyo 100-8405 (JP); KOIKE Akio, Tokyo 100-8405 (JP)
(74) Representative: Müller-Boré & Partner Patentanwälte PartG mbB
(86) International application number: PCT/JP2013/065451
(87) International publication number: WO 2013/183626

(57) **Abstract**

The present invention relates to an alkali-free glass having a strain point of 680 to 735°C, an average thermal expansion coefficient at from 50 to 350°C of from 30×10⁻⁷ to 43×10⁻⁷/°C, a temperature T₂ at which glass viscosity reaches 10² dPa·s of 1,710°C or lower, and a temperature T₄ at which the glass viscosity reaches 10⁴ dPa·s of 1,310°C or lower, and containing, indicated by mol% on the basis of oxides, SiO₂ 63 to 74, Al₂O₃ 11.5 to 16, B₂O₃ exceeding 1.5 to 5, MgO 5.5 to 13, CaO 1.5 to 12, SrO 1.5 to 9, BaO 0 to 1, and ZrO₂ 0 to 2, in which MgO+CaO+SrO+BaO is from 15.5 to 21, MgO/(MgO+CaO+SrO+BaO) is 0.35 or more, CaO/(MgO+CaO+SrO+BaO) is 0.50 or less, and SrO/(MgO+CaO+SrO+BaO) is 0.50 or less.

## Description

### TECHNICAL FIELD

The present invention relates to an alkali-free glass that is suitable as a substrate glass for various displays and a substrate glass for a photomask, does not substantially contain an alkali metal oxide and is capable of being formed by a float process.

### BACKGROUND ART

Heretofore, a substrate glass for various displays, particularly ones on which surfaces a metal or oxide thin film or the like is formed, has been required to have the following characteristics:
(1) Not substantially containing alkali metal ions; because in the case where an alkali metal oxide is contained, alkali metal ions diffuse in the thin film, resulting in deterioration of film characteristics.
(2) Having a high strain point so that deformation of a glass and shrinkage (thermal shrinkage) due to structure stabilization of the glass can be minimized when exposed to high temperature in a thin film formation step.
(3) Having sufficient chemical durability to various chemicals used in semiconductor formation; in particular, having durability to buffered hydrofluoric acid (BHF: mixed liquid of hydrofluoric acid and ammonium fluoride) for etching SiOₓ or SiNₓ, a chemical solution containing hydrochloric acid used for etching of ITO, various acids (nitric acid, sulfuric acid, etc.) used for etching of an metal electrode, and an alkaline of a resist removing liquid.
(4) Having no defects (bubbles, striae, inclusions, pits, flaws, etc.) in the inside and on the surface.
   In addition to the above requirements, the recent situations are as follows.
(5) Reduction in weight of a display is required, and the glass itself is also required to be a glass having a small density.
(6) Reduction in weight of a display is required, and a decrease in thickness of the substrate glass is desired.
(7) In addition to conventional amorphous silicon (a-Si) type liquid crystal displays, polycrystal silicon (p-Si) type liquid crystal displays requiring a slightly high heat treatment temperature have come to be produced (a-Si: about 350°C → p-Si: 350 to 550°C).
(8) In order to improve productivity and increase thermal shock resistance by increasing the rate of rising and falling temperature in heat treatment for preparation of a liquid crystal display, a glass having a small average thermal expansion coefficient is required.

On the other hand, dry etching has prevailed, and requirement of BHF resistance has come to be weakened. As conventional glasses, many glasses containing B₂O₃ in an amount of from 6 to 10 mol% have been used in order to improve BHF resistance. However, B₂O₃ has a tendency to decrease the strain point. As examples of alkali-free glasses containing no or only small amount of B₂O₃, there are the following ones:

Patent Document 1 discloses a glass containing B₂O₃ in an amount of from 0 to 3% by weight. However, the strain point in Examples thereof is 690°C or lower.

Patent Document 2 discloses a glass containing B₂O₃ in an amount of from 0 to 5 mol%. However, the average thermal expansion coefficient thereof at from 50 to 350°C exceeds 50×10⁻⁷/°C.

In order to solve the problems in the glasses described in Patent Documents 1 and 2, an alkali-free grass described in Patent Document 3 is proposed. The alkali-free grass described in Patent Document 3 is considered to have a high strain point, to be able to be formed by a float process, and to be suitable for use in a substrate for a display, a substrate for a photomask and the like.

### PRIOR ART DOCUMENTS

### PATENT DOCUMENTS

Patent Document 1: JP-A-H4-325435
Patent Document 2: JP-A-H5-232458
Patent Document 3: JP-A-H9-263421

### SUMMARY OF THE INVENTION

### PROBLEMS THAT THE INVENTION IS TO SOLVE

In recent years, in a small-sized high definition display such as a portable terminal such as a smartphone, a method using a laser annealing is employed as a method for producing p-Si TFT with high quality, and in order to further reduce compaction, glass with a high strain point has been demanded. Further, in accordance with an increase in size and reduction in thickness of a glass substrate, glass with a high Young's modulus and a high specific modulus (Young's modulus/density) has been demanded.

Meanwhile, from a request in a glass production process, particularly in float forming, there are demands for decreasing the viscous properties of glass, particularly, a temperature T₄ at which the glass viscosity reaches 10⁴ dPa·s and the devitrification temperature, and for not increasing the strain point extremely.

As described above, the alkali-free glass used as substrate glass for various displays or substrate glass for a photomask is required to increase the strain point.

However, when the strain point is extremely high, the points described below may become problems at the time of producing glass.
The temperature in a float bath and at an outlet of the float bath is increased to have an influence on the lifetime of metal members positioned in the float bath and on the downstream side of the float bath in some cases.
• It is necessary to increase the temperature in a part leading from an outlet of the float bath to an annealing furnace, because plane strain of the glass is improved. However, when the temperature in this case is too high, a load is placed on a heater used for heating to have an influence on the lifetime of the heater in some cases.

Further, a demand for BHF resistance has been weak, but this does not mean that the demand is completely gone. A problem of the haze after a treatment using BHF becomes significant in a composition with no B₂O₃.

An object of the present invention is to provide an alkali-free glass which solves the above-described problems, hardly causes a problem due to BHF, has a high strain point and low viscous properties, particular a low temperature T₄ at which the glass viscosity reaches 10⁴ dPa·S, and is easily formed by a float process.

### MEANS FOR SOLVING THE PROBLEMS

The present invention provides an alkali-free glass having a strain point of 680 to 735°C, an average thermal expansion coefficient at from 50 to 350°C of from 30×10⁻⁷ to 43x 10⁻⁷/°C, a temperature T₂ at which glass viscosity reaches 10² dPa·s of 1,710°C or lower, and a temperature T₄ at which the glass viscosity reaches 10⁴ dPa·s of 1,310°C or lower, and containing, indicated by mol% on the basis of oxides,

| | |
|---|---|
| SiO₂ | 63 to 74, |
| Al₂O₃ | 11.5 to 16, |
| B₂O₃ | exceeding 1.5 to 5, |
| MgO | 5.5 to 13, |
| CaO | 1.5 to 12, |
| SrO | 1.5 to 9, |
| BaO | 0 to 1, and |
| ZrO₂ | 0 to 2, |

in which MgO+CaO+SrO+BaO is from 15.5 to 21,
MgO/(MgO+CaO+SrO+BaO) is 0.35 or more,
CaO/(MgO+CaO+SrO+BaO) is 0.50 or less, and
SrO/(MgO+CaO+SrO+BaO) is 0.50 or less.

The present invention also provides an alkali-free glass having a strain point of 680 to 735°C, an average thermal expansion coefficient at from 50 to 350°C of from 30×10⁻⁷ to 43×10⁷/°C, a temperature T₂ at which glass viscosity reaches 10² dPa·s of 1,710°C or lower, and a temperature T₄ at which the glass viscosity reaches 10⁴ dPa·s of 1,310°C or lower, and containing, indicated by mol% on the basis of oxides,

| | |
|---|---|
| SiO₂ | 63 to 74, |
| Al₂O₃ | 11.5 to 14, |
| B₂O₃ | exceeding 1.5 to 5, |
| MgO | 5.5 to 13, |
| CaO | 1.5 to 12, |
| SrO | 1.5 to 9, |
| BaO | 0 to 1, and |
| ZrO₂ | 0 to 2, |

in which MgO+CaO+SrO+BaO is from 15.5 to 21,
MgO/(MgO+CaO+SrO+BaO) is 0.35 or more,
CaO/(MgO+CaO+SrO+BaO) is 0.50 or less, and
SrO/(MgO+CaO+SrO+BaO) is 0.30 or less.

### ADVANTAGEOUS EFFECTS OF INVENTION

The alkali-free glass of the present invention is suitable particularly for a substrate for a display, a substrate for a photomask and the like for a high strain point use, and further, is an easily float-formable glass. The alkali-free glass of the present invention can be used as a glass substrate for a magnetic disk.

### MODE FOR CARRYING OUT THE INVENTION

Next, the composition range of each component will be described. In the case where SiO₂ is less than 63% (mol%, hereinafter the same unless otherwise noted), the strain point is not sufficiently increased, the thermal expansion coefficient is increased, and the density is increased. It is preferably 64% or more, more preferably 65% or more, still more preferably 66% or more, and particularly preferably 66.5% or more. In the case of exceeding 74%, the meltability is decreased, a temperature T₂ at which glass viscosity reaches 10² dPa·s or a temperature T₄ at which the glass viscosity reaches 10⁴ dPa·s is increased, and the devitrification temperature is increased. It is preferably 70% or less, more preferably 69% or less, and still more preferably 68% or less.

Al₂O₃ suppresses phase-separation of the glass, decreases the thermal expansion coefficient, and increases the strain point. However, in the case of less than 11.5%, the effects are not exhibited, and another component which increases the expansion is required to be increased, as a result, the thermal expansion becomes increased. It is preferably 12% or more, 12.5% or more, or 13% or more. In the case of exceeding 16%, there is a concern that the meltability of the glass is degraded or the devitrification temperature is increased. It is preferably 15% or less, more preferably 14% or less, and still more preferably 13.5% or less.

B₂O₃ improves the melting reactivity of the glass, decreases the devitrification temperature, and improves BHF resistance. However, in the case of 1.5% or less, the effects are not sufficiently exhibited, and the strain point may be extremely increased or a problem of the haze after a treatment using BHF may be easily generated. It is preferably 2% or more, 2.5% or more, or 3% or more. However, in the case of exceeding 5%, the strain point is decreased and the Young's modulus is decreased. It is preferably 4.5% or less and more preferably 4% or less.

MgO has characteristics that it does not increase the expansion among alkaline earths, and increases the Young's modulus while maintaining the density to be low, and also improves the meltability. However, in the case of less than 5.5%, the effects are not sufficiently exhibited, and the density is increased because another alkaline earth ratio is increased. It is preferably 6% or more or 7% or more, or more preferably 7.5% or more, 8% or more or more than 8%, or still more preferably 8.1% or more or 8.3% or more, and particularly preferably 8.5% or more. In the case of exceeding 13%, the devitrification temperature is increased. It is preferably 12% or less, more preferably 11% or less, and particularly preferably 10% or less.

CaO has characteristics that it does not increase the expansion, next to MgO among alkaline earths, and increase the Young's modulus while maintaining the density to be low, and also improves the meltability. In the case of less than 1.5%, the effects due to the addition of CaO are not sufficiently exhibited. It is preferably 2% or more, more preferably 3% or more, still more preferably 3.5% or more, and particularly preferably 4% or more. However, in the case of exceeding 12%, there is a concern that the devitrification temperature is increased or phosphorus that is an impurity in calcium carbonate (CaCO₃) as a raw material of CaO is largely mixed in. It is preferably 10% or less, more preferably 9% or less, still more preferably 8% or less, and particularly preferably 7% or less.

SrO improves the meltability without increasing the devitrification temperature of the glass. However, in the case of less than 1.5%, the effects are not sufficiently exhibited. It is preferably 2% or more, more preferably 2.5% or more, and still more preferably 3% or more. However, in the case of exceeding 9%, there is a concern that the expansion coefficient is increased. It is preferably 7% or less or 6% or less, and still more preferably 5% or less.

BaO is not indispensable, but can be contained for improving the meltability. However, too much causes excessive increases in the expansion and density of the glass, accordingly, it is set to be 1% or less. It is preferably 0.5% or less, more preferably 0.3% or less, still more preferably 0.1% or less, and particularly preferably substantially not contained. The expression "not substantially contained" means that materials other than unavoidable impurities are not contained.

ZrO₂ may be contained up to 2% in order to decrease the melting temperature of the glass or accelerate crystal deposition at the time of firing. In the case of exceeding 2%, the glass becomes unstable or a relative dielectric constant ε of the glass becomes increased. It is preferably 1.5% or less, more preferably 1 % or less, still more preferably 0.5% or less, and particularly preferably substantially not contained.

When the total content of MgO, CaO, SrO, and BaO is less than 15.5%, the temperature T₄ at which the glass viscosity reaches 10⁴ dPa·s is increased so that the lifetime of a heater or a housing structure of a float bath may be extremely shortened at the time of float forming. It is preferably 16% or more and still more preferably 17% or more. In the case of exceeding 21 %, there is a concern that the thermal expansion coefficient cannot be decreased. It is preferably 20% or less or 19% or less, and still more preferably 18% or less.

When the total content of MgO, CaO, SrO, and BaO satisfies the above-described conditions and the following conditions are also satisfied, the Young's modulus and the specific modulus can be increased without increasing the devitrification temperature, and the viscous properties of the glass, particularly the temperature T₄ can be decreased.

MgO/(MgO+CaO+SrO+BaO) is 0.35 or more, preferably 0.37 or more, and more preferably 0.4 or more.

CaO/(MgO+CaO+SrO+BaO) is 0.50 or less, more preferably 0.48 or less, and still more preferably 0.45 or less.

SrO/(MgO+CaO+SrO+BaO) is 0.50 or less, preferably 0.40 or less, more preferably 0.30 or less, more preferably 0.27 or less, and still more preferably 0.25 or less.

In the alkali-free glass of the present invention, when Al₂O₃×(MgO/(MgO+CaO+SrO+BaO)) is 4.3 or more, the Young's modulus can be increased, which is preferable. It is preferably 4.5 or more, more preferably 4.7 or more, and still more preferably 5.0 or more.

In addition, the glass of the present invention does not contain alkali metal oxides in an amount exceeding the level of impurities (that is, substantially) in order not to deteriorate the properties of a metal or oxide thin film provided on the glass surface at the time of producing a panel. Further, it is preferable that PbO, As₂O₃, and Sb₂O₃ be not substantially contained in order to facilitate recycle of the glass.

Further, for a similar reason, it is preferable that the content of P₂O₅ be substantially not contained. The mixed amount as an impurity is preferably 23 mol ppm or less, more preferably 18 mol ppm or less, still more preferably 11 mol ppm or less, and particularly preferably 5 mol ppm or less.

In addition to the above-mentioned components, the alkali-free glass of the present invention can contain ZnO, Fe₂O₃, SO₃, F, Cl, and SnO₂ in a total content of 5% or less, in order to improve the meltability, clarity, and formability (float formability) of the glass.

The alkali-free glass of the present invention has a strain point of from 680°C to 735°C.

Since the alkali-free glass of the present invention has a strain point of 680°C or higher, thermal shrinkage at the time of producing a panel can be suppressed. Moreover, a method using laser annealing can be employed as a method of producing p-Si TFT. It is more preferably 685°C or higher and still more preferably 690°C or higher.

Since the alkali-free glass of the present invention has a strain point of 680°C or higher, it is suitable for a high strain point use (e.g., a substrate for a display or a substrate for illumination for organic EL, having a plate thickness of 0.7 mm or less, preferably 0.5 mm or less, and more preferably 0.3 mm or less, or a substrate for a display or a substrate for illumination, which is a thin plate having a plate thickness of 0.3 mm or less and preferably 0.1 mm or less).

In forming a plate glass having a plate thickness of 0.7 mm or less, preferably 0.5 mm or less, more preferably 0.3 mm or less, and still more preferably 0.1 mm or less, since the drawing rate at the time of forming tends to become fast, the fictive temperature of the glass is easily increased and the compaction of the glass easily becomes larger. In this case, if the glass is a glass with a high strain point, the compaction can be suppressed.

Meanwhile, since the strain point is 735°C or lower, the temperature in a float bath or at an outlet of the float bath is not required to be so high and the lifetime of a metal member positioned in the float bath or on the downstream side of the float bath is not affected much. It is more preferably 725°C or lower, still more preferably 715°C or lower, and particularly preferably 710°C or lower.

Moreover, the temperature of a portion entering an annealing furnace from the outlet of the float bath is required to be increased for improving plane distortion of the glass, but it is unnecessary to increase the temperature so much at this time. Accordingly, a load is not applied to a heater used for heating so that the lifetime of the heater is not affected much.

Moreover, for the same reason as the case of the strain point, the alkali-free glass of the present invention has a glass transition point of preferably 730°C or higher, more preferably 740°C or higher, and still more preferably 750°C or higher. Further, it is preferably 780°C or lower, more preferably 775°C or lower, and particularly preferably 770°C or lower.

In addition, since the alkali-free glass of the present invention has an average thermal expansion coefficient at from 50 to 350°C of from 30×10⁻⁷ to 43×10⁻⁷/°C, it has a high thermal impact resistance and can increase the productivity at the time of producing a panel. In the alkali-free glass of the present invention, the average thermal expansion coefficient at from 50 to 350°C is preferably 35×10⁻⁷/°C or higher. The average thermal expansion coefficient at from 50 to 350°C is preferably 42×10⁻⁷/°C or lower, more preferably 41×10⁻⁷/°C or lower, and still more preferably 40×10⁻⁷/°C or lower.

Moreover, the alkali-free glass of the present invention has a specific gravity of preferably 2.62 or less, more preferably 2.60 or less, and still more preferably 2.58 or less.

Further, the alkali-free glass of the present invention has a temperature T₂ at which a viscosity η reaches 10² poise (dPa·s) is 1,710°C or lower, more preferably 1,700°C or lower, still more preferably 1,690°C or lower, particularly preferably 1,680°C or lower, and more particularly preferably 1,670°C or lower, and thus, the melting can be relatively easily carried out.

Further, the alkali-free glass of the present invention has a temperature T₄ at which the viscosity η reaches 10⁴ poise is 1,310°C or lower, preferably 1,305°C or lower, more preferably 1,300°C or lower, still more preferably lower than 1,300°C), still more preferably 1,295°C or lower, and still more preferably 1,290°C or lower, which is suitable for float forming.

In addition, it is preferable that the alkali-free glass of the present invention has a devitrification temperature of 1,315°C or lower, because a float forming can be easily carried out. It is preferably 1,300°C or lower, more preferably lower than 1,300°C, still more preferably 1,290°C or lower, and still more preferably 1280°C or lower. A difference (T₄ - devitrification temperature) between the temperature T₄ (the temperature at which the glass viscosity η reaches 10⁴ poise, unit: °C) which is a standard for float formability or fusion formability and the devitrification temperature is preferably -20°C or higher, more preferably -10°C or higher, sill more preferably 0°C or higher, still more preferably 10°C or higher, still more preferably 20°C or higher, and particularly preferably 30°C or higher.

The devitrification temperature in the present specification is an average value between the maximum temperature at which crystals are deposited on the surface and the inside of the glass and the minimum temperature at which crystals are not deposited, which are measured by putting pulverized glass particles in a platinum plate, performing a heat treatment for 17 hours in an electric furnace whose temperature is controlled to be constant, and performing observation with an optical microscope after the heat treatment.

Further, the alkali-free glass of the present invention has a Young's modulus of preferably 78 GPa or more, more preferably 79 GPa or more, still more preferably 80 GPa or more, still more preferably 81 GPa or more, and still more preferably 82 GPa or more.

Moreover, it is preferred that the alkali-free glass of the present invention has a photoelastic constant of 31 nm/MPa/cm or less.

When the glass substrate has birefringence due to stress generated in a production step of a liquid crystal display panel or at the time of use of a liquid crystal display apparatus, a phenomenon that display of black turns to gray to decrease a contrast of the liquid crystal display is sometimes observed. This phenomenon can be suppressed by adjusting the photoelastic constant to 31 nm/MPa/cm or less. It is preferably 30 nm/MPa/cm or less, more preferably 29 nm/MPa/cm or less, still more preferably 28.5 nm/MPa/cm or less, and particularly preferably 28 nm/MPa/cm or less.

Further, it is preferred that the alkali-free glass of the present invention has a Photoelastic constant of 23 nm/MPa/cm or more, and more preferably 25 nm/MPa/cm or more, considering easiness of securing other physical properties.

Incidentally, the photoelastic constant can be measured by a disk compression method at a measurement wavelength of 546 nm.

Further, it is preferable that the alkali-free glass of the present invention has a small shrinkage amount at the time of performing a heat treatment. In production of a liquid crystal panel, the heat treatment process varies on an array side and a color filter side. Accordingly, in a panel with high definition particularly, when the thermal shrinkage ratio of the glass is large, there is a problem in that dots are shifted at the time of fitting. Further, evaluation on the thermal shrinkage ratio can be performed by the following procedures. A sample is held at a temperature of (the glass transition point + 100°C) for 10 minutes and then cooled to room temperature by 40°C for each minute. Here, the total length of the sample is measured. Next, the sample is heated to 600°C by 100°C for each minute, held at 600°C for 80 minutes, cooled to room temperature by 100°C for each minute, and then the total length of the sample is measured again. The ratio of the shrinkage amount of the sample before and after the heat treatment at 600°C to the total length of the sample before the heat treatment at 600°C is taken as the thermal shrinkage ratio. In the evaluation method, the thermal shrinkage ratio is preferably 100 ppm or less, more preferably 80 ppm or less, still more preferably 60 ppm or less or 55 ppm or less, and particularly preferably 50 ppm or less.

The alkali-free glass of the present invention can be produced, for example, by the following method. Raw materials of respective components which are generally used are blended to make target components, continuously put into a melting furnace and heated at from 1,500°C to 1,800°C to be melted. The molten glass is formed to have a predetermined plate thickness by a float method and plate glass can be obtained by annealing and then cutting the glass.

It is preferable that the alkali-free glass of the present invention uses the following as the raw materials of each component due to relatively low meltability.

### (Silicon source)

Silica sand can be used as a silicon source of SiO₂ raw material. When silica sand having a median diameter D₅₀ of from 20 to 27 µm, a ratio of particles having a particle size of 2 µm or less of 0.3% by volume or less and a ratio of particles having a particle size of 100 µm or more of 2.5% by volume or less is used, silica sand can be melted while suppressing aggregation thereof, so that melting of silica sand becomes easy to obtain the alkali-free glass having less bubbles and high homogeneity and flatness. This is therefore preferred.

Further, the term "particle size" in the present specification means a sphere equivalent diameter (means a primary particle size in the present invention) of silica sand, and specifically means a particle size in particle size distribution of powder measured by a laser diffraction/scattering method.

In addition, the term "median particle size D₅₀" in the present specification means a particle size where volume frequency of particles having a particle size of larger than a certain particle size occupies 50% of the whole powder in the particle size distribution of the powder measured by a laser diffraction method. In other words, in the particle size distribution of the powder measured by a laser diffraction method, the term means a particle size at the time when a cumulative frequency is 50%.

Further, "the ratio of particles having a particle size of 2 µm or less" and "the ratio of particles having a particle size of 100 µm or more" in the present specification are measured, for example, through measurement of particle size distribution by using a laser diffraction/scattering method.

It is more preferred that the median diameter D₅₀ of silica sand is 25 µm or less, because melting of silica sand becomes easier.

In addition, it is particularly preferred that the ratio of particles having a particle size of 100 µm or more in silica sand is 0%, because melting of silica sand becomes easier.

### (Alkaline-earth metal source)

As the alkaline-earth metal source, an alkaline-earth metal compound can be used. Specific examples of the alkaline-earth metal compound include carbonates such as MgCO₃, CaCO₃, BaCO₃, SrCO₃, and (Mg,Ca)CO₃ (dolomite), oxides such as MgO, CaO, BaO, and SrO; and hydroxides such as Mg(OH)₂, Ca(OH)₂, Ba(OH)₂, and Sr(OH)₂. From a viewpoint of a decrease in an unmelted amount of SiO₂ components at the time of melting the glass raw materials, it is preferable that a part or all of the alkaline-earth metal source contain hydroxide of the alkaline-earth metal. When the unmelted amount of the SiO₂ components contained in silica sand is increased, the unmelted SiO₂ is enclosed by foam when the foam is generated in the glass melt to be aggregated in the vicinity of the surface layer of the glass melt. In this manner, a difference in the composition ratios of SiO₂ between the surface layer of the glass melt and a portion other than the surface layer is generated, and the homogeneity and the flatness of the glass are decreased.

It is more preferable that the content of the hydroxide of the alkaline-earth metal be preferably from 15 to 100 mol% (in terms of MO, provided that M represents an alkaline-earth metal element), more preferably from 30 to 100 mol% (in terms of MO), and still more preferably from 60 to 100 mol% (in terms of MO) with respect to 100 mol% of the alkaline-earth metal source (in terms of MO) from a viewpoint of a decrease in unmelted amount of the SiO₂ component at the time of melting the glass raw materials.

Since the unmelted amount of the SiO₂ components at the time of melting the glass raw materials is decreased in accordance with the increase in the molar ratio of the hydroxide in the alkaline-earth metal source, the molar ratio of the hydroxide is better to be higher.

As the alkaline-earth metal source, specifically, a mixture of hydroxide and carbonate of an alkaline-earth metal, hydroxide alone of the alkaline-earth metal, or the like can be used. As the carbonate, at least one of MgCO₃, CaCO₃, and (Mg,Ca)(CO₃)₂ (dolomite) is preferably used. In addition, as the hydroxide of the alkaline-earth metal, it is preferable that at least one of Mg(OH)₂ and Ca(OH)₂ be used and particularly preferable that Mg(OH)₂ be used.

### (Boron source)

When the alkali-free glass contains B₂O₃, a boron compound can be used as a boron source of B₂O₃. Here, specific examples of the boron compound include orthoboric acid (H₃BO₃), metaboric acid (HBO₂), tetraboric acid (H₂B₄O₇), and anhydrous boric acid (B₂O₃). In the usual alkali-free glass production, orthoboric acid is used in terms of low cost and availability.

In the present invention, as a boron source, it is preferable that one containing anhydrous boric acid in a content of from 10 to 100% by mass (in terms of B₂O₃) with respect to 100% by mass (in terms of B₂O₃) of the boron source. When the anhydrous boric acid is contained in a content of 10% by mass or more, the aggregation of the glass raw materials is suppressed, and an effect of reducing foam, and effects of improving homogeneity and flatness can be obtained. The anhydrous boric acid is more preferably from 20 to 100% by mass and still more preferably from 40 to 100% by mass.

As a boron compound other than the anhydrous boric acid, orthoboric acid is preferable in terms of low cost and availability.

### EXAMPLES

In the description below, examples 1 to 8, and examples 12 to 32 are Examples and the examples 9 to 11 are Comparative Examples. Raw materials of respective components were blended to make target compositions, and melted in a platinum crucible in a temperature of from 1,550 to 1,650°C. As the particle size of silica sand in raw materials, the median particle size D₅₀ was 26 µm, the ratio of particles having a particle size of 2 µm or less was less than 0.1% by volume, and the ratio of particles having a particle size of 100 µm or more was less than 0.1 % by volume. At the time of melting, glass was stirred by using a platinum stirrer to conduct homogenization. Subsequently, the molten glass was flown out, formed into a plate shape and then annealed.

In Tables 1 to 4, the glass composition (unit: mol%), the thermal expansion coefficient (unit: ×10⁻⁷/°C) at from 50 to 350°C, the strain point (unit: °C), the glass transition point (unit: °C), the specific gravity, the Young's modulus (GPa) (measured by using an ultrasonic method), the temperature T₂ (temperature at which the glass viscosity η reaches 10² poise, unit: °C) which is an index for the meltability and the temperature T₄ (temperature at which the glass viscosity η reaches 10⁴ poise, unit: °C) which is an index for the float formability or the fusion formability as the high temperature viscosity values, the devitrification temperature (unit: °C), the photoelastic constant (unit: nm/MPa/cm) (measurement was performed at a measurement wavelength of 546 nm by using a disk compression method), and the relative permittivity (measured by using a method described in JIS C-2141) are shown. The evaluation on the thermal shrinkage ratio was performed by the following procedures. A sample is held at a temperature of (the glass transition point + 100°C) for 10 minutes and then cooled to room temperature by 40°C for each minute. Here, the total length of the sample is measured. Next, the sample is heated to 600°C by 100°C for each minute, held at 600°C for 80 minutes, cooled to room temperature by 100°C for each minute, and then the total length of the sample is measured again. The ratio of the shrinkage amount of the sample before and after the heat treatment at 600°C to the total length of the sample before the heat treatment at 600°C was taken as the thermal shrinkage ratio.

In addition, in Tables 1 to 4, the values in parentheses are calculated values.

**[Table 1]**

| mol% | Ex. 1 | Ex. 2 | Ex. 3 | Ex. 4 | Ex. 5 | Ex. 6 | Ex. 7 | Ex. 8 |
|---|---|---|---|---|---|---|---|---|
| SiO₂ | 66.9 | 66.7 | 66.5 | 68.1 | 67.5 | 67.1 | 66.2 | 67.0 |
| Al₂O₃ | 13.0 | 12.5 | 12.1 | 13.3 | 12.7 | 12.3 | 13.0 | 13.8 |
| B₂O₃ | 1.7 | 3.5 | 4.8 | 1.7 | 3.5 | 4.8 | 3.1 | 1.6 |
| MgO | 8.8 | 7.7 | 6.9 | 6.7 | 6.2 | 5.9 | 9.0 | 10.3 |
| CaO | 5.1 | 5.0 | 4.9 | 7.3 | 6.5 | 5.9 | 5.3 | 2.2 |
| SrO | 4.5 | 4.7 | 4.8 | 2.9 | 3.6 | 4.1 | 3.5 | 5.0 |
| BaO | 0 | 0 | 0 | 0 | 0 | 0 | 0 | 0 |
| ZrO₂ | 0 | 0 | 0 | 0 | 0 | 0 | 0 | 0 |
| MgO+CaO+SrO+BaO | 18.4 | 17.4 | 16.6 | 16.9 | 16.3 | 15.9 | 17.8 | 17.6 |
| MgO/(MgO+CaO+SrO+BaO) | 0.48 | 0.44 | 0.42 | 0.40 | 0.38 | 0.37 | 0.51 | 0.59 |
| CaO/(MgO+CaO+SrO+BaO) | 0.28 | 0.29 | 0.29 | 0.43 | 0.40 | 0.37 | 0.30 | 0.13 |
| SrO/(MgO+CaO+SrO+BaO) | 0.24 | 0.27 | 0.29 | 0.17 | 0.22 | 0.26 | 0.20 | 0.29 |
| Al₂O₃×(MgO/(MgO+CaO+SrO+BaO)) | 6.19 | 5.52 | 5.03 | 5.26 | 4.84 | 4.53 | 6.58 | 8.12 |
| Average thermal expansion coefficient [×10⁻⁷/°C] | 40.8 | 39.2 | 39.5 | 38.9 | 39.1 | 38.2 | 39.2 | 36.3 |
| Strain point [°C] | (715) | 701 | (691) | (731) | 715 | (702) | 716 | 732 |
| Glass transition point [°C] | 768 | 750 | 750 | 785 | 762 | 747 | 760 | 781 |
| Specific gravity | 2.59 | 2.55 | 2.59 | 2.59 | 2.59 | 2.57 | 2.59 | 2.59 |
| Young's modulus [GPa] | 84 | 82 | 81 | 85 | 82 | 80 | 84 | 86 |
| T₂[°C] | 1643 | 1645 | 1639 | 1666 | 1660 | 1656 | 1626 | 1645 |
| T₄[°C] | 1295 | 1290 | 1286 | 1309 | 1300 | 1296 | 1281 | 1298 |
| Devitrification temperature [°C] | 1250 | 1230 | 1230 | 1270 | 1270 | 1270 | 1250 | 1290 |
| Photoelastic constant [nm/MPa/cm] | 27.0 | 28.1 | 28.3 | 27.3 | 28.4 | 28.9 | 27.4 | 27.1 |
| Thermal shrinkage ratio [ppm] | 49.2 | - | - | 44.8 | - | - | 50.1 | 32.1 |

**[Table 2]**

| mol% | Ex. 9 | Ex. 10 | Ex. 11 | Ex. 12 | Ex. 13 | Ex. 14 | Ex. 15 | Ex. 16 |
|---|---|---|---|---|---|---|---|---|
| SiO₂ | 68.1 | 68.5 | 68.2 | 65.4 | 64.3 | 66.7 | 65.0 | 66.8 |
| Al₂O₃ | 12.1 | 12.9 | 13.0 | 13.5 | 13.5 | 13.5 | 13.5 | 13.8 |
| B₂O₃ | 1.9 | 4.0 | 3.8 | 2.5 | 4.0 | 3.0 | 3.0 | 2.8 |
| MgO | 7.2 | 4.5 | 6.8 | 9.9 | 8.7 | 7.2 | 11.1 | 8.4 |
| CaO | 9.3 | 6.5 | 3.8 | 6.7 | 7.5 | 7.6 | 2.0 | 5.0 |
| SrO | 1.3 | 3.7 | 4.4 | 2.0 | 2.0 | 2.0 | 5.4 | 3.2 |
| BaO | 0.2 | 0 | 0 | 0 | 0 | 0 | 0 | 0 |
| ZrO₂ | 0 | 0 | 0 | 0 | 0 | 0 | 0 | 0 |
| MgO+CaO+SrO+BaO | 18.0 | 14.7 | 15.0 | 18.6 | 18.2 | 16.8 | 18.6 | 16.6 |
| MgO/(MgO+CaO+SrO+BaO) | 0.40 | 0.31 | 0.45 | 0.53 | 0.48 | 0.43 | 0.60 | 0.50 |
| CaO/(MgO+CaO+SrO+BaO) | 0.52 | 0.44 | 0.25 | 0.36 | 0.41 | 0.45 | 0.11 | 0.30 |
| SrO/(MgO+CaO+SrO+BaO) | 0.07 | 0.25 | 0.29 | 0.11 | 0.11 | 0.12 | 0.29 | 0.19 |
| Al₂O₃×(MgO/(MgO+CaO+SrO+BaO)) | 4.88 | 3.93 | 5.90 | 7.20 | 6.47 | 5.79 | 8.10 | 6.95 |
| Average thermal expansion coefficient [×10⁻⁷/°C] | 38.7 | 35.2 | 34.9 | 38.3 | 39.2 | 38.4 | 37.8 | 36.5 |
| Strain point [°C] | 718 | 727 | 727 | 714 | 700 | 716 | 711 | 712 |
| Glass transition point [°C] | 775 | 781 | 783 | 768 | 759 | 770 | 771 | 770 |
| Specific gravity | 2.53 | 2.51 | 2.51 | 2.54 | 2.53 | 2.52 | 2.59 | 2.54 |
| Young's modulus [GPa] | 83 | 80 | 80 | 88 | 85 | 86 | 86 | 86 |
| T₂[°C] | 1691 | 1750 | 1711 | 1603 | 1589 | 1643 | 1621 | 1644 |
| T₄[°C] | 1317 | 1329 | 1322 | 1266 | 1258 | 1295 | 1280 | 1298 |
| Devitrification temperature [°C] | 1305 | 1295 | 1295 | 1265 | 1245 | 1275 | 1285 | 1285 |
| Photoelastic constant [nm/MPa/cm] | 27.1 | 28.7 | 27.2 | 26.8 | 27.9 | 27.7 | 27.2 | 27.9 |
| Thermal shrinkage ratio [ppm] | - | - | - | 43.2 | 54.8 | 57.2 | 44.2 | 41.6 |

**[Table 3]**

| mol% | Ex. 17 | Ex. 18 | Ex. 19 | Ex. 20 | Ex. 21 | Ex. 22 | Ex. 23 | Ex. 24 |
|---|---|---|---|---|---|---|---|---|
| SiO₂ | 66.0 | 64.7 | 64.7 | 66.4 | 66.6 | 66.8 | 66.2 | 67.2 |
| Al₂O₃ | 13.8 | 13.8 | 14.5 | 13.6 | 13.9 | 13.9 | 13.8 | 13.7 |
| B₂O₃ | 2.8 | 2.8 | 2.9 | 1.9 | 1.9 | 1.9 | 2.8 | 2.8 |
| MgO | 8.7 | 10.7 | 6.7 | 6.7 | 7.6 | 9.1 | 6.4 | 8.0 |
| CaO | 6.1 | 5.1 | 7.7 | 6.3 | 8.2 | 6.7 | 7.9 | 6.5 |
| SrO | 2.6 | 2.9 | 3.5 | 5.1 | 1.8 | 1.6 | 2.9 | 1.8 |
| BaO | 0 | 0 | 0 | 0 | 0 | 0 | 0 | 0 |
| ZrO₂ | 0 | 0 | 0 | 0 | 0 | 0 | 0 | 0 |
| MgO+CaO+SrO+BaO | 17.4 | 18.7 | 17.9 | 18.1 | 17.5 | 17.4 | 17.2 | 16.3 |
| MgO/(MgO+CaO+SrO+BaO) | 0.50 | 0.57 | 0.38 | 0.37 | 0.43 | 0.52 | 0.37 | 0.49 |
| CaO/(MgO+CaO+SrO+BaO) | 0.35 | 0.27 | 0.43 | 0.35 | 0.47 | 0.39 | 0.46 | 0.40 |
| SrO/(MgO+CaO+SrO+BaO) | 0.15 | 0.15 | 0.19 | 0.28 | 0.10 | 0.09 | 0.17 | 0.11 |
| Al₂O₃×(MgO/(MgO+CaO+SrO+BaO)) | 6.87 | 7.90 | 5.43 | 5.04 | 5.98 | 7.27 | 5.11 | 6.75 |
| Average thermal expansion coefficient [×10⁻⁷/°C] | 37.5 | 39.0 | 38.9 | 41.3 | 37.5 | 38.4 | 38.4 | 35.6 |
| Strain point [°C] | 715 | 712 | 717 | 719 | 725 | 723 | 714 | 714 |
| Glass transition point [°C] | 767 | 768 | 768 | 774 | 777 | 781 | 770 | 771 |
| Specific gravity | 2.54 | 2.55 | 2.57 | 2.59 | 2.53 | 2.53 | 2.54 | 2.51 |
| Young's modulus [GPa] | 86 | 87 | 86 | 87 | 88 | 86 | 88 | 84 |
| T₂[°C] | 1631 | 1609 | 1622 | 1646 | 1638 | 1633 | 1644 | 1646 |
| T₄[°C] | 1285 | 1268 | 1278 | 1299 | 1296 | 1295 | 1293 | 1300 |
| Devitrification temperature [°C] | 1245 | 1275 | 1265 | 1305 | 1275 | 1295 | 1310 | - |
| Photoelastic constant [nm/MPa/cm] | 27.7 | 27.2 | 27.1 | 27.7 | 27.5 | 27.7 | 28.1 | 27.8 |
| Thermal shrinkage ratio [ppm] | 58.1 | 43.2 | 55.7 | 57.5 | 52.6 | 56.4 | - | - |

**[Table 4]**

| mol% | Ex. 25 | Ex. 26 | Ex. 27 | Ex. 28 | Ex. 29 | Ex. 30 | Ex. 31 | Ex. 32 |
|---|---|---|---|---|---|---|---|---|
| SiO₂ | 67.2 | 66.1 | 65.3 | 64.4 | 65.0 | 65.6 | 64.0 | 65.2 |
| Al₂O₃ | 13.2 | 13.5 | 13.7 | 13.8 | 12.7 | 13.0 | 12.5 | 12.8 |
| B₂O₃ | 2.8 | 2.3 | 1.9 | 1.6 | 2.6 | 3.0 | 3.3 | 3.0 |
| MgO | 9.9 | 11.2 | 13.0 | 13.0 | 9.6 | 6.7 | 9.2 | 6.5 |
| CaO | 5.1 | 1.6 | 1.6 | 1.6 | 5.8 | 6.2 | 6.0 | 6.5 |
| SrO | 1.8 | 5.3 | 4.5 | 5.6 | 3.8 | 5.0 | 4.0 | 5.0 |
| BaO | 0 | 0 | 0 | 0 | 0.5 | 0.5 | 0 | 0 |
| ZrO₂ | 0 | 0 | 0 | 0 | 0 | 0 | 1.0 | 1.0 |
| MgO+CaO+SrO+BaO | 16.8 | 18.1 | 19.1 | 20.2 | 19.7 | 18.4 | 19.2 | 18.0 |
| MgO/(MgO+CaO+SrO+BaO) | 0.59 | 0.62 | 0.68 | 0.64 | 0.49 | 0.36 | 0.48 | 0.36 |
| CaO/(MgO+CaO+SrO+BaO) | 0.30 | 0.09 | 0.08 | 0.08 | 0.29 | 0.34 | 0.31 | 0.36 |
| SrO/(MgO+CaO+SrO+BaO) | 0.11 | 0.29 | 0.24 | 0.28 | 0.19 | 0.27 | 0.21 | 0.28 |
| Al₂O₃×(MgO/(MgO+CaO+SrO+BaO)) | 7.80 | 8.4 | 9.3 | 8.9 | 6.2 | 4.7 | 6.0 | 4.6 |
| Average thermal expansion coefficient [×10⁻⁷/°C] | 35.5 | (36.0) | (36.0) | (38.5) | (41.5) | (41.4) | (42.1) | (41.5) |
| Strain point [°C] | 722 | (725) | (725) | (725) | (712) | (724) | (704) | (725) |
| Glass transition point [°C] | 772 | (776) | (782) | (788) | (760) | (764) | (754) | (763) |
| Specific gravity | 2.50 | (2.58) | (2.57) | (2.61) | (2.57) | (2.57) | (2.57) | (2.58) |
| Young's modulus [GPa] | 86 | (85) | (86) | (88) | (85) | (84) | (85) | (85) |
| T₂[°C] | 1644 | (1637) | (1636) | (1615) | (1612) | (1633) | (1600) | (1632) |
| T₄ [°C] | 1293 | (1290) | (1279) | (1270) | (1268) | (1287) | (1259) | (1285) |
| Devitrification temperature [°C] | - | - | - | - | - | - | - | - |
| Photoelastic constant [nm/MPa/cm] | 28.2 | (27.1) | (26.7) | (25.9) | (26.7) | (27.1) | (27.0) | (27.0) |
| Thermal shrinkage ratio [ppm] | - | - | - | - | - | - | - | - |

As is evident from Tables above, since the thermal expansion coefficient is low as 30×10⁻⁷ to 43×10⁻⁷/°C, the temperature T₂ at which the glass viscosity reaches 10² dPa·s is 1,710°C or lower, and the temperature T₄ at which the glass viscosity reaches 10⁴ dPa·s is lower than 1,310°C, all glass of Examples are excellent in meltability is excellent and has less effects on a metal member positioned in the float bath or on the downstream side of the float bath or on the lifetime of a heater used in a portion entering an annealing furnace from the outlet of the float bath at the time of producing glass.

Further, since the devitrification temperature is 1,310°C or lower, it is considered that troubles such as generation of devitrification at the time of performing float forming do not occur.

The present invention has been described in detail with reference to specific embodiments thereof, but it will be apparent to one skilled in the art that various modifications and changes can be made without departing the scope and spirit of the present invention.

The present application is based on Japanese Patent Application No. 2012-128248 filed on June 5, 2012 and Japanese Patent Application No. 2012-242783 filed on November 2, 2012, and the contents of which are incorporated herein by reference.

### INDUSTRIAL APPLICABILITY

Since the alkali-free glass of the present invention has a high strain point and can be formed by a float method, it is suitable for the usage of a substrate for a display or a substrate for a photomask. Further, it is also suitable for the usage of a substrate for an information recording medium or a substrate for solar cells.

## Claims

1. An alkali-free glass having a strain point of 680 to 735°C, an average thermal expansion coefficient at from 50 to 350°C of from 30×10⁻⁷ to 43×10⁻⁷/°C, a temperature T₂ at which glass viscosity reaches 10² dPa·s of 1,710°C or lower, and a temperature T₄ at which the glass viscosity reaches 10⁴ dPa·s of 1,310°C or lower, and comprising, indicated by mol% on the basis of oxides,
| | |
|---|---|
| SiO₂ | 63 to 74, |
| Al₂O₃ | 11.5 to 16, |
| B₂O₃ | exceeding 1.5 to 5, |
| MgO | 5.5 to 13, |
| CaO | 1.5 to 12, |
| SrO | 1.5 to 9, |
| BaO | 0 to 1, and |
| ZrO₂ | 0 to 2, |
wherein MgO+CaO+SrO+BaO is from 15.5 to 21,
MgO/(MgO+CaO+SrO+BaO) is 0.35 or more,
CaO/(MgO+CaO+SrO+BaO) is 0.50 or less, and
SrO/(MgO+CaO+SrO+BaO) is 0.50 or less.

2. An alkali-free glass having a strain point of 680 to 735°C, an average thermal expansion coefficient at from 50 to 350°C of from 30×10⁻⁷ to 43×10⁻⁷/°C, a temperature T₂ at which glass viscosity reaches 10² dPa·s of 1,710°C or lower, and a temperature T₄ at which the glass viscosity reaches 10⁴ dPa·s of 1,310°C or lower, and comprising, indicated by mol% on the basis of oxides,
| | |
|---|---|
| SiO₂ | 63 to 74, |
| Al₂O₃ | 11.5 to 14, |
| B₂O₃ | exceeding 1.5 to 5, |
| MgO | 5.5 to 13, |
| CaO | 1.5 to 12, |
| SrO | 1.5 to 9, |
| BaO | 0 to 1, and |
| ZrO₂ | 0 to 2, |
wherein MgO+CaO+SrO+BaO is from 15.5 to 21,
MgO/(MgO+CaO+SrO+BaO) is 0.35 or more,
CaO/(MgO+CaO+SrO+BaO) is 0.50 or less, and
SrO/(MgO+CaO+SrO+BaO) is 0.30 or less.

3. The alkali-free glass according to claim 1 or 2, having a devitrification temperature of 1,315°C or lower.
